# EUROPEAN PATENT SPECIFICATION

(11) **EP 4 621 194 B1**
(45) Date of publication and mention of the grant of the patent: **29.04.2026**
(21) Application number: 25154120.7
(22) Date of filing: 27.01.2025
(51) Int. Cl.: F01K 23/10, F22B 37/24

(54) **ENVIRONMENTAL FACILITY SUPPORTING STRUCTURE OF VERTICAL HEAT RECOVERY STEAM GENERATOR**
STÜTZSTRUKTUR FÜR UMGEBUNGSANLAGE EINES VERTIKALEN WÄRMERÜCKGEWINNUNGSDAMPFGENERATORS
STRUCTURE DE SUPPORT D'INSTALLATION ENVIRONNEMENTALE DE GÉNÉRATEUR DE VAPEUR À RÉCUPÉRATION DE CHALEUR VERTICALE

(30) Priority: 19.03.2024 KR 20240037693
(43) Date of publication of application: 24.09.2025
(73) Proprietor: Doosan Enerbility Co., Ltd., Changwon-si, Gyeongsangnam-do 641-792 (KR)
(72) Inventor: KIM, Kyuman, Busan (KR); YOU, Daesun, Changwon-si (KR); LEE, Kyeongseok, Changwon-si (KR); LEE, Youngwook, Changwon-si (KR); JEGAL, Hoon, Changwon-si (KR); HONG, Jongho, Changwon-si (KR)
(74) Representative: Ter Meer Steinmeister & Partner

(56) References cited:
- CN-A- 111 981 681
- DE-B3- 102019 128 381
- US-A- 5 722 354
- US-B2- 10 145 626

## Description

### BACKGROUND OF THE INVENTION

### Field of the Invention

The present invention relates to an environmental facility supporting structure of a vertical heat recovery steam generator. More particularly, the present invention relates to an environmental facility supporting structure of a vertical heat recovery steam generator with a thermal-expansion absorbing structure for the environment facility of the vertical heat recovery steam generator.

### Description of the Related Art

A supporting device for storing a load body, such as a boiler for an incineration plant, is disclosed for example in document DE10 2019 128381 B3.

A combined cycle power plant injects high temperature exhaust gas emitted from a gas turbine into a heat recovery steam generator (a "HRSG"), which uses it as a heat source to generate high temperature and high pressure steam, so as to maximize plant output and efficiency of gas turbine power generation.

The high temperature and high pressure steam generated at this time drives a steam turbine and a generator to generate electricity. The combined cycle power plant consists of a gas turbine, a heat recovery steam generator including a high pressure evaporator, a medium pressure evaporator, and a low pressure evaporator, and a stream turbine.

A generation method of the combined cycle power plant is a method of driving the gas turbine for primary generation, and recovering high temperature exhaust gas of about 620 °C by the heat recovery steam generator, and then using the recovery heat to generate steam suitable for generation by a steam turbine, which increases thermal efficiency.

The heat recovery steam generator is a type of boiler, and uses the high temperature combustion gas emitted from the gas turbine to generate high temperature and high pressure steam, and the steam is used to drive the steam turbine or for industrial processes.

The combined cycle power plant is equipped with a stove pipe to discharge harmful substances contained in combustion gas. To remove the harmful substances, a filter is provided at an inlet part of the combustion gas.

However, the environmental facility where a filter of the conventional HRSG is provided is installed inside the HRSG where heat exchange of main gas is performed. Accordingly, it is inadequate in terms of response of thermal expansion and safety facilities for installation and maintenance.

### SUMMARY OF THE INVENTION

An objective of the present invention is to secure structural stability through a thermal expansion absorbing structure for an environmental facility of a vertical HRSG.

Another objective of the present invention is to secure maintenance stability for an environmental facility of a vertical HRSG.

The problems that the present invention seeks to solve are not limited to the above-mentioned problem, and other problems not mentioned herein will be clearly understood by those skilled in the art from the description below. The problems are solved by the features of the independent claim.

According to an embodiment of the present invention, there is provided an environmental facility supporting structure of a vertical heat recovery steam generator, the environmental facility supporting structure including: a plurality of supporting parts; a plurality of fixing parts into which the plurality of supporting parts is inserted vertically, and each having an extending part on at least one side portion; a seated member seated on the extending parts provided in the plurality of fixing parts; and a plurality of filter members provided at an upper portion of the seated member. The plurality of fixing parts is connected to the plurality of supporting parts to be movable according to vertical displacement.

Preferably, the seated member may have a grating structure.

Preferably, the plurality of filter members may be arranged at an upper portion of one seated member.

Preferably, the supporting part may include a plurality of supporting rods and an inserted plate connected to an upper portion of each supporting rod.

Preferably, the fixing part may include a head part and a pair of fixing plates arranged below the head part at an interval therebetween. The head part and the pair of fixing plates form an insertion groove and the inserted plate may be inserted into the insertion groove.

Preferably, an extending part may be provided on an outer surface of the inserted plate.

Preferably, a rib may be arranged below the extending part and connected to the pair of fixing plates to support the extending part.

Preferably, a shock absorbing part may be arranged at one portion of the extending part.

Preferably, a vibration absorbing part may be arranged inside the insertion groove.

The present invention can secure the structural stability for high temperatures of the ultra-supercritical pressure vertical HRSG to achieve active response to frequent start/stop and driving situations.

Furthermore, a welding structure is emitted in a structure to support a catalyst to absorb thermal expansion and movement, thereby maintaining structural stability.

The various beneficial advantages and effects of the present invention are not limited to the above description and will be more easily understood in the process of explaining a specific embodiment of the present invention.

### BRIEF DESCRIPTION OF THE DRAWINGS

FIG. 1 is a view illustrating an arrangement structure of an environmental facility supporting structure of vertical heat recovery steam generator according to an embodiment of the present invention.
FIG. 2 is a top view illustrating the environmental facility supporting structure of a unit vertical heat recovery steam generator of FIG. 1.
FIG. 3 is a side view of FIG. 2.
FIG. 4 is a view illustrating a structure of a fixing part which is a component of FIG. 2.
FIG. 5 is a view illustrating a coupling state of FIG. 2.
FIG. 6 is a view illustrating an arrangement state of the fixing part of FIG. 2.

### DETAILED DESCRIPTION OF THE INVENTION

Hereinbelow, an exemplary embodiment of the present invention will be described in detail with reference to the accompanying drawings.

However, the technical idea of the present invention is not limited to the embodiments described but may be implemented in various forms. Within the scope of the technical idea of the present invention, one or more of the components among the embodiments may be selectively combined or substituted for use.

Furthermore, in the flowing description, unless otherwise defined, all terms (including technical and scientific terms) used in the embodiment of the present invention have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and the present invention.

Terms used in the embodiment of the present invention are selected to describe embodiments and thus should not be construed as the limit of the present invention.

In the flowing description, unless otherwise defined, the singular forms "a", "an", and "the" are intended to include the plural forms as well. If it is described that a component is at least one of (or one or more of) A, B, and C, it should be understood that a component may be one or more of all combinations that can be combined with A, B, and C.

Further, when describing the components of the present invention, term such as first, second, A, B, (a) or (b) may be used.

Since these terms are provided merely for the purpose of distinguishing the components from each other, they do not limit the nature, sequence or order of the components.

When a component is referred to as being "coupled" or "connected" to another component, it can be directly coupled or connected to the other component or intervening components may be present therebetween.

Furthermore, if it is described that a components is formed or disposed above (upper) or below (lower) another component, it should be included that components are disposed in directly contact with each other and one or more components are formed or disposed between the two components. Furthermore, terms such as "above (upper)" or "below (lower)" may include meanings of a downward direction as well as an upward direction based on one component.

Hereinbelow, the embodiment of the present invention will be described in detail with reference to the accompanying drawings. The same reference numerals are used throughout the different drawings to designate the same or similar components, and descriptions thereof will be described.

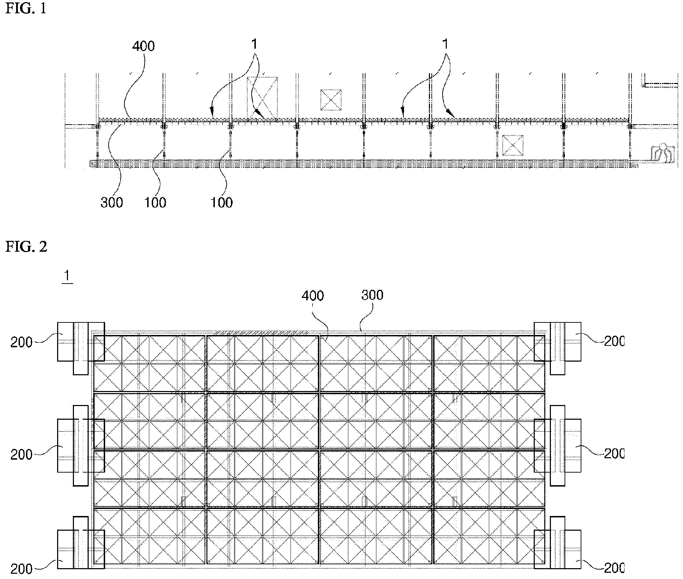

FIGS. 1 to 6 clearly illustrate only main features to clearly understand the present invention. As a result, different variations of the illustrations are expected, and the scope of the present invention does not need to be limited by the specific forms illustrated in the drawings.

FIG. 1 is a view illustrating an arrangement structure of an environmental facility supporting structure of vertical heat recovery steam generator according to an embodiment of the present invention.

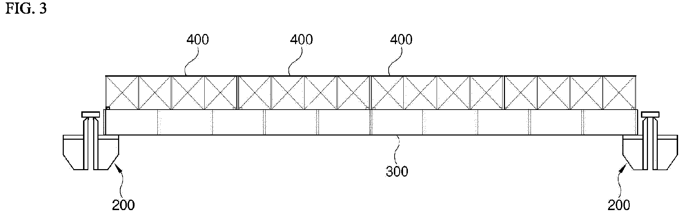

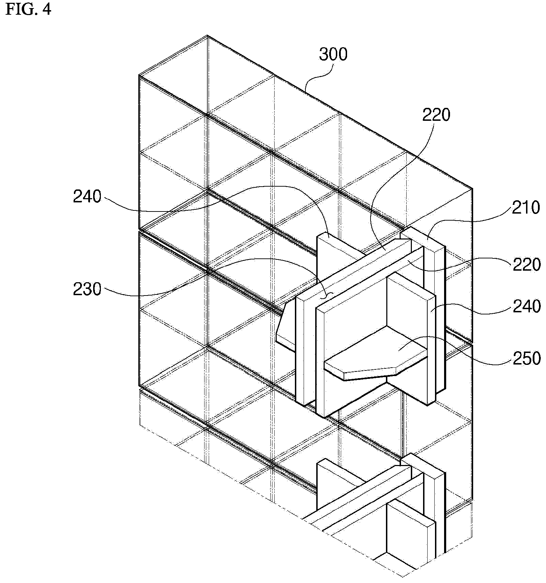

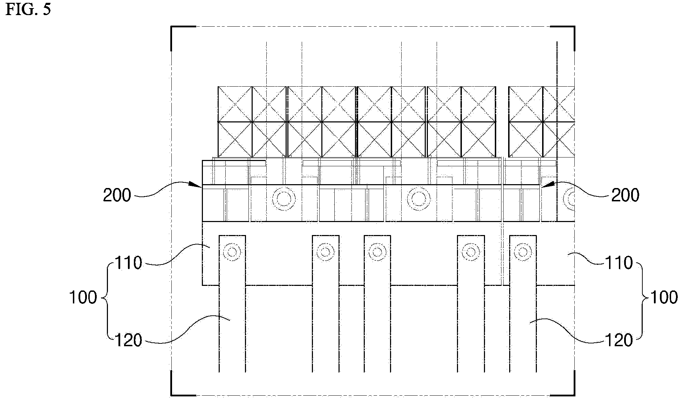

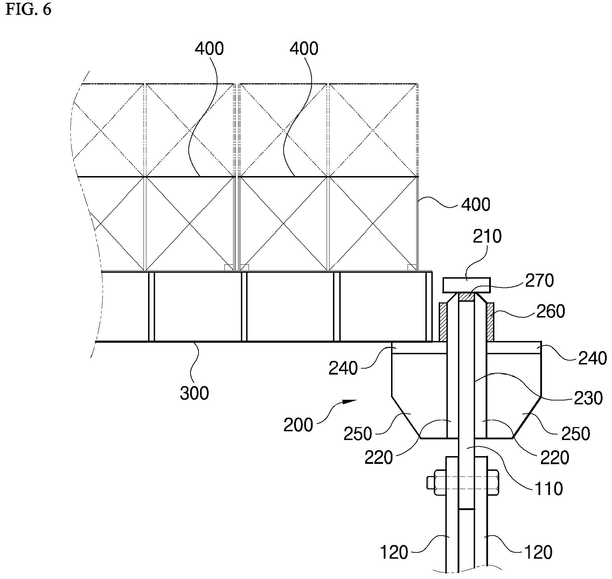

FIG. 2 is a top view illustrating the environmental facility supporting structure of a unit vertical heat recovery steam generator of FIG. 1. FIG. 3 is a side view of FIG. 2. FIG. 4 is a view illustrating a structure of a fixing part which is a component of FIG. 2. FIG. 5 is a view illustrating a coupling state of FIG. 2. FIG. 6 is a view illustrating an arrangement state of the fixing part of FIG. 2.

Referring to FIGS. 1 to 6, according to the embodiment of the present invention, an environmental facility supporting structure 1 of a vertical heat recovery steam generator (a "HRSG") has a structure installed inside the vertical HRSG.

A conventional HRSG has a horizontal structure with an environmental facility such as a filter which is stacked so that a separate structure is unnecessary. However, a structure for stacking the structural environmental facility is required in the vertical tube type structure.

According to the embodiment of the present invention, the environmental facility supporting structure 1 of the vertical HRSG may include a supporting part 100, a fixing part 200, a seated member 300, and a filter member 400. The environmental facility supporting structure 1 of the vertical HRSG including the configuration is arranged at a lower portion of the HRSG. A plurality of environmental facility supporting structures 1 of the vertical HRSGmay be installed inside one HRSG.

Accordingly, when a problem occurs in the supporting structure, the vertical HRSGcan be easily repaired and maintained.

The supporting part 100 is provided to space the environmental facility from the bottom surface of the HRSG. The supporting part 100 may include a supporting rod 120 and an inserted plate 110.

The supporting part 100 may support the whole structure with a grid-frame structure.

A first portion of the supporting rod 120 may be supported by the bottom surface of the HRSG, and a second portion of the supporting rod 120 may be fixed to the inserted plate 110.

As an embodiment, a pair of supporting rods 120 may be arranged to face each other at the inserted plate 110, and the fixing part 200 may have a structure securely through the supporting rods 120. The supporting rods 120 may be shaped without limitations, and may be deformed and embodied into various shapes to stably support the structure. Furthermore, to achieve the stable support structure, opposite inserted plates 110 may be preferably arranged symmetrically to each other.

The inserted plate 110 may be a plate structure having a predetermined thickness. A section of an upper portion of the inserted plate 110 has an elongated plane, and the inserted plate 110 has a connection structure with the upper portion inserted into the fixing part 200.

The fixing part 200 has a structure in which the supporting part 100 is vertically inserted. The connection structure of the fixing part 200 is the insertion structure not a welded structure, and it can accommodate a vertical change in accordance with thermal expansion. When deformation of the supporting part 100 may occur due to thermal expansion, the fixing part 200 may slidingly move in response.

The fixing part 200 may include a head part 210, a fixing plate 220, and an extending part 240.

The head part 210 is a part supporting a load by being brought in contact with the inserted plate 110. The head part 210 may have an elongated-type plate structure having a predetermined thickness. However, the head part 210 may have different forms without limitations and may be deformed and embodied into various forms.

A pair of fixing plates 220 may be provided and may be arranged below the head part 210 and spaced apart from each other. The pair of fixing plates 220 may have a plate structure having a predetermined thickness. As an embodiment, the pair of fixing plates 220 may have a quadrangular plate structure, but is not limited thereto, and may be deformed and embodied into various forms to support a load.

One portion of the pair of fixing plates 220 may be connected to the head part 210. With the connection structure, an insertion groove 230 may be formed by the head part 210 and the pair of fixing plates 220.

The insertion groove 230 may have a structure open in a facing direction. The structure may allow the fixing part 200 to move slidingly in accordance with a transverse displacement, and a structure allowing the fixing part 200 to move in accordance with a vertical displacement may be provided.

As best seen in FIG. 6, a vibration absorbing part 270 may be provided in the insertion groove 230, i.e., on one surface of the head part 210. The vibration absorbing part 270 may absorb vibrations generated when multiple structures are connected to each other or move and may prevent noise generation in accordance with movement. Furthermore, when a shock is generated, the vibration absorbing part 270 may serve to absorb the shock.

The extending part 240 may be provided on at least one side portion of the fixing part 200 and support the seated member 300.

The extending part 240 may be vertically connected to outer surface of the pair of fixing plates 220 of the fixing part 200. As the embodiment, the extending part 240 may have a quadrangular plate structure for stable support.

Furthermore, depending on a position where the fixing part 200 is installed, the number of extending parts 240 may be changed. As the embodiment, the extending part 240 may be installed in one direction of the fixing part 200 installed at one side portion of the whole HRSG. For a structure supporting opposite side portions, the extending part 240 may be arranged at outer surfaces of the pair of fixing plates 220.

A lower portion of the extending part 240 may have a rib 250 supporting the pair of fixing plates 220 and the extending part 240. The rib 250 may be arranged to support the pair of fixing plates 220 and the extending part 240 below a connection surface of the extending part 240 and the pair of fixing plates 220. A trimming structure may be provided to reduce load.

The number of ribs 250 is not limited, and the installed number thereof may be designed depending on the extending part 240.

Furthermore, a shock absorbing part 260 may be provided at one portion of the extending part 240. In other words, the shock absorbing part 260 may be provided at an upper portion of each fixing plate 220 where the extending part 240 and each fixing plate 220 are coupled to each other. When the seated member 300 is shaken or a displacement occurs, the shock absorbing part 260 may absorb a shock due to a collision between the seated member 300 and the fixing part 200.

Such a coupling structure of the fixing part 200 may include a coupling structure that can respond to all displacement in three-axis directions through the vibration absorbing part 270 and the shock absorbing part 260.

As the embodiment, the shock absorbing part 260 may be formed of an elastic material and may be attached to an outer surface of the pair of fixing plates 220.

The seated member 300 may be seated on the extending parts 240 arranged at the plurality of fixing parts 200. The seated member 300 may have a structure supported by the extending part 240 arranged to face each other.

Conventionally, the seated member 300 has a frame structure for the filter member 400 to be seated. However, the frame structure may have a problem exposing a fabricator to danger when the fabricator performs seating operation of the filter member 400. To prevent the problem, the seated member 300 of the present invention is formed in a grating structure, thereby securing the safety of the fabricator and increasing a supporting force of the filter member 400.

The filter member 400 may be a plurality of filter members 400 located above the seated member 300.

The filter member 400 may be arranged by being divided into multiple filter members to facilitate repair and fabrication. A type of filter member 400 is not limited, and may be various devices such as a filter to reduce carbon dioxide emitted from the HRSG, a selective catalyst reduction ("SCR") to reduce nitrogen oxide, or the like.

As described above, the environmental facility supporting structure 1 of the vertical heat recovery steam generator according to the embodiment of the present invention can respond to a displacement in each of three-axis directions due to thermal deformation and secure the safety of the fabricator.

Hereinabove, the embodiment of the present invention has been described in detail with reference to the accompanying drawings.

## Claims

1. An environmental facility supporting structure of a vertical heat recovery steam generator, the environmental facility supporting structure comprising:
a plurality of supporting parts (100);
**characterised by**
a plurality of fixing parts (200) into which the plurality of supporting parts (100) is inserted vertically, and each having an extending part (240) on at least one side portion;
a seated member (300) seated on the extending parts (240) provided in the plurality of fixing parts (200); and
a plurality of filter members (400) provided at an upper portion of the seated member (300),
wherein the plurality of fixing parts (200) is connected to the plurality of supporting parts (100) to be movable according to vertical displacement.

2. The environmental facility supporting structure of claim 1, wherein the seated member (300) has a grating structure.

3. The environmental facility supporting structure of claim 1 or 2, wherein the plurality of filter members(400) is arranged on one seated member(300).

4. The environmental facility supporting structure according to any one of the preceding claims, wherein the plurality of supporting parts (100) comprises a plurality of supporting rods (120) and an inserted plate (110) connected to an upper portion of each supporting rod (120).

5. The environmental facility supporting structure according to any one of the preceding claims, wherein the plurality of fixing parts (200) comprises a head part (210) and a pair of fixing plates (220), the pair of fixing plates (220) being arranged below the head part (210) at an interval therebetween, and the inserted plate (110) is inserted into an insertion groove (230) provided by the head part (210) and the pair of fixing plates (220).

6. The environmental facility supporting structure of claim 5, wherein the extending part (240) is arranged at an outer surface of the inserted plate (110).

7. The environmental facility supporting structure of claim 5 or 6, wherein a rib (250) is arranged on a lower portion of the extending part (240) and is connected to the pair of fixing plates (220) to support the extending part (240).

8. The environmental facility supporting structure of claim 5, 6 or 7, wherein a shock absorbing part (260) is arranged at one portion of the extending part (240).

9. The environmental facility supporting structure of claim 5, 6, 7 or 8, wherein a vibration absorbing part (270) is arranged inside the insertion groove (230).

## Patentansprüche

1. Umweltanlagen-Trägerstruktur eines vertikalen Wärmerückgewinnungs-Dampfgenerators, wobei die Umweltanlagen-Trägerstruktur Folgendes umfasst:
mehrere Trägerkomponenten (100);
**gekennzeichnet durch**
mehrere Befestigungskomponenten (200), in die die mehreren Trägerkomponenten (100) vertikal eingesetzt sind und die jeweils eine Erweiterungskomponente (240) auf mindestens einem Seitenabschnitt aufweisen;
ein aufgesetztes Element (300), das auf den Erweiterungskomponenten (240) aufgesetzt ist, die in den mehreren Befestigungskomponenten (200) vorgesehen sind; und
mehrere Filterelemente (400), die an einem oberen Abschnitt des aufgesetzten Elements (300) vorgesehen sind,
wobei die mehreren Befestigungskomponenten (200) derart mit den mehreren Trägerelementen (100) verbunden sind, dass sie gemäß einer vertikalen Verlagerung beweglich sind.

2. Umweltanlagen-Trägerstruktur nach Anspruch 1, wobei das aufgesetzte Element (300) eine Gitterstruktur aufweist.

3. Umweltanlagen-Trägerstruktur nach Anspruch 1 oder 2, wobei die mehreren Filterelemente (400) auf einem aufgesetzten Element (300) angeordnet sind.

4. Umweltanlagen-Trägerstruktur nach einem der vorhergehenden Ansprüche, wobei die mehreren Trägerkomponenten (100) mehrere Trägerstangen (120) und eine eingesetzte Platte (110), die mit einem oberen Abschnitt jeder Trägerstange (120) verbunden ist, umfassen.

5. Umweltanlagen-Trägerstruktur nach einem der vorhergehenden Ansprüche, wobei die mehreren Befestigungskomponenten (200) eine Kopfkomponente (210) und ein Paar Befestigungsplatten (220) umfassen, wobei das Paar Befestigungsplatten (220) unter der Kopfkomponente (210) mit einem Abstand dazwischen angeordnet ist und die eingesetzte Platte (110) in eine Einsetzfuge (230) eingesetzt ist, die durch die Kopfkomponente (210) und das Paar Befestigungsplatten (220) bereitgestellt wird.

6. Umweltanlagen-Trägerstruktur nach Anspruch 5, wobei die Erweiterungskomponente (240) an einer äußeren Fläche der eingesetzten Platte (110) angeordnet ist.

7. Umweltanlagen-Trägerstruktur nach Anspruch 5 oder 6, wobei eine Rippe (250) auf einem unteren Abschnitt der Erweiterungskomponente (240) angeordnet ist und mit dem Paar Befestigungsplatten (220) verbunden ist, um die Erweiterungskomponente (240) zu tragen.

8. Umweltanlagen-Trägerstruktur nach Anspruch 5, 6 oder 7, wobei eine Stoßdämpferkomponente (260) an einem Abschnitt der Erweiterungskomponente (240) angeordnet ist.

9. Umweltanlagen-Trägerstruktur nach Anspruch 5, 6, 7 oder 8, wobei eine Schwingungsabsorptionskomponente (270) im Inneren der Einsetzfuge (230) angeordnet ist.

## Revendications

1. Structure de support d'installation environnementale d'un générateur de vapeur à récupération de chaleur verticale, la structure de support d'installation environnementale comportant :
une pluralité de parties de support (100) ;
**caractérisée par**
une pluralité de parties de fixation (200) dans laquelle la pluralité de parties de support (100) est insérée verticalement, et ayant chacune une partie d'extension (240) sur au moins une portion latérale ;
un élément en appui (300) en appui sur les parties d'extension (240) agencées dans la pluralité de parties de fixation (200) ; et
une pluralité d'éléments de filtre (400) agencés sur une portion supérieure de l'élément en appui (300),
dans laquelle la pluralité de parties de fixation (200) est reliée à la pluralité de parties de support (100) de manière à être mobile en fonction d'un déplacement vertical.

2. Structure de support d'installation environnementale selon la revendication 1, dans laquelle l'élément en appui (300) a une structure de réseau.

3. Structure de support d'installation environnementale selon la revendication 1 ou 2, dans laquelle la pluralité d'éléments de filtre (400) est agencée sur un élément en appui (300).

4. Structure de support d'installation environnementale selon l'une quelconque des revendications précédentes, dans laquelle la pluralité de parties de support (100) comporte une pluralité de tiges de support (120) et une plaque insérée (110) reliée à une portion supérieure de chaque tige de support (120).

5. Structure de support d'installation environnementale selon l'une quelconque des revendications précédentes, dans laquelle la pluralité de parties de fixation (200) comporte une partie de tête (210) et une paire de plaques de fixation (220), la paire de plaques de fixation (220) étant agencée sous la partie de tête (210) à un intervalle entre celles-ci, et la plaque insérée (110) est insérée dans une rainure d'insertion (230) fournie par la partie de tête (210) et la paire de plaques de fixation (220).

6. Structure de support d'installation environnementale selon la revendication 5, dans laquelle la partie d'extension (240) est agencée sur une surface extérieure de la plaque insérée (110).

7. Structure de support d'installation environnementale selon la revendication 5 ou 6, dans laquelle une nervure (250) est agencée sur une portion inférieure de la partie d'extension (240) et est reliée à la paire de plaques de fixation (220) pour supporter la partie d'extension (240).

8. Structure de support d'installation environnementale selon la revendication 5, 6 ou 7, dans laquelle une partie d'absorption de chocs (260) est agencée sur une portion de la partie d'extension (240).

9. Structure de support d'installation environnementale selon la revendication 5, 6, 7 ou 8, dans laquelle une partie d'absorption de vibrations (270) est agencée à l'intérieur de la rainure d'insertion (230).
